## Europäisches Patentamt

## European Patent Office

## Office européen des brevets

(19)

(11) Veröffentlichungsnummer: **0 288 415**

**A2**

(12) # EUROPÄISCHE PATENTANMELDUNG

(21) Anmeldenummer: **88710004.8**

(22) Anmeldetag: **11.03.88**

(51) Int. Cl.$^4$: **G 01 G 13/06**

(30) Priorität: **13.03.87 DE 3708078**

(43) Veröffentlichungstag der Anmeldung:
**26.10.88 Patentblatt 88/43**

(84) Benannte Vertragsstaaten: **DE ES FR GB**

(71) Anmelder: **ROVEMA Verpackungsmaschinen GmbH
Postfach 20
D-6301 Fernwald-Annerod (DE)**

(72) Erfinder: **Kammler, Roman, Dr.
Wallstrasse 2
D-6520 Worms (DE)**

**Baur, Walter, Dr.
Herzbergstrasse 37-39
D-6466 Gründau 1 (DE)**

(74) Vertreter: **Missling, Arne, Dipl.-Ing.
Patentanwalt Bismarckstrasse 43
D-6300 Giessen (DE)**

(54) **Verfahren und Vorrichtung zum selbsttätigen gravimetrischen Abfüllen von Schüttgut und/oder Flüssigkeiten.**

(57) Die Erfindung betrifft ein Verfahren und eine Vorrichtung zum selbsttätigen gravimetrischen Abfüllen von Schüttgutchargen aus einem Vorratsbehälter (10) über ein Grobdosiersystem (G) und ein Feindosiersystem (F). Nach einer einmaligen Grob-Vordosierung werden alle weiteren Grob- und Feindosierungen in den beiden Systemen (G, F) im wesentlichen gleichzeitig, jedoch phasenverschoben durchgeführt. Bevorzugt erfolgt die Grobdosierung zeitgesteuert, die Feindosierung gewichtsabhängig. In jedem Arbeitszyklus ($t_z$) wird eine aus Hauptmenge ($m_1$) und Ergänzungsmenge ($m_2$) zusammengesetzte Charge abgefüllt. Grob- und Feindosiersysteme können in gleicher oder unterschiedlicher Anzahl kombiniert sein, auch in mehreren Baueinheiten.

Fig. 4

EP 0 288 415 A2

Bundesdruckerei Berlin

## Beschreibung

### Verfahren und Vorrichtung zum selbsttätigen gravimetrischen Abfüllen von Schüttgut und/oder Flüssigkeiten

Die Erfindung betrifft ein Verfahren zum selbsttätigen gravimetrischen Abfüllen von Schüttgut und/oder Flüssigkeiten gemäß dem Oberbegriff von Anspruch 1, sowie eine Vorrichtung gemäß dem Oberbegriff von Anspruch 8, insbesondere zum Durchführen des Verfahrens.

Bei einem verbreiteten Netto-Abfüllverfahren wird in die zu füllende Packung zunächst eine Grobschüttung eingebracht, die ungefähr 60 % bis 90 % der Gesamtfüllmenge ausmacht; anschließend erfolgt durch einen zweiten, separaten Massenstrom eine Feinfüllung, mit der die Endmenge erreicht werden soll. Die Summe dieser zwei Dosierzeiten, der Grobdosierzeit und der Feindosierzeit, bestimmt den gesamten Dosierzyklus, von dem wiederum der Leistungsdurchsatz abhängt.

Aus den DE-OS 27 46 343 und 31 06 473 ist der Versuch ersichtlich, das herkömmliche Netto-Abfüllverfahren zu optimieren. Der größte Nachteil liegt jedoch in der langen Zyklusdauer des Dosierens von Grob- und Feinstrom. Hieran aendert auch eine laut OS 27 46 343 vorgesehene Auffangtasche über einem Wägebehälter nichts, mit welcher der Nachfall des Produktes nach dem Abschalten der Zufuhr bei größeren Fallwegen abgefangen wird. Auch automatisches Einstellen des Füllstrom-Abschaltzeitpunktes gemäß OS 31 06 473 beeinflußt die gesamte Zyklusdauer nicht. Denn benutzt man eine Waage in herkömmlicher Weise zum Abfüllung von Packungen im Dauerbetrieb, und zwar taktrichtig in Verbindung mit einer automatischen Verpackungsmaschine, so bestimmt das längste Arbeitsspiel der Abfüllwaage die mögliche Gesamtleistung des Verpackungsautomaten. Nachteilig ist ferner, daß der Fallweg des Produktes in den Wägebehälter den Arbeitszyklus herkömmlich verlängert.

Es ist ein wichtiges Ziel der Erfindung, die Nachteile des Standes der Technik mit möglichst wirtschaftlichen Mitteln zu überwinden und ein Verfahren der eingangs genannten Art so zu gestalten, daß der Dosierzyklus wesentlich verkürzt und die Abpackleistung erheblich gesteigert wird. Ferner bezweckt die Erfindung die Schaffung einer Vorrichtung, die bei einfachem und übersichtlichem Aufbau ein schnelles, genaues und zuverlässiges Abpacken der verschiedensten Schüttgüter ermöglicht.

Der Grundgedanke des Verfahrens nach der Erfindung ist im kennzeichnenden Teil von Anspruch 1 angegeben; Ausgestaltungen sind Gegenstand der Ansprüche 2 bis 7. Im kennzeichnenden Teil von Anspruch 8 sind die Hauptmerkmale einer erfindungsgemäßen Vorrichtung aufgeführt; Weiterbildungen sind in den Ansprüchen 9 bis 22 präzisiert.

Das Grundprinzip der Erfindung sieht vor, daß zumindest zwei getrennte Dosier- und Wägesysteme zeitgleich, jedoch phasenverschoben arbeiten. Nach einmaliger Grob-Vordosierung wird dadurch in jedem Arbeitszyklus eine komplette Sollmenge abgefüllt, was gegenüber dem Stand der Technik mindestens eine Verdoppelung der Gesamtleistung bewirkt. Diese beträchtliche Zeitersparnis ist schon dann erzielbar, wenn man nur ein Dosier- und Wägesystem ausschließlich zur Grobdosierung sowie nur ein Dosier- und Wägesystem ausschließlich zur Feindosierung vorsieht. Während die Grobdosierung eine Hauptmenge liefert, ergänzt die Feindosierung dies bis zur Sollmenge. Hierbei hat der Fallweg keinen Einfluß auf die Dauer des Arbeitszyklus. Durch die zeitliche Versetzung jeweils zugeordneter Grob- und Feindosiervorgänge erreicht man eine optimale Maschinenausnutzung. Bei stark verringerter Anzahl der benötigten Baugruppen ergibt sich eine außerordentlich große Packleistung. Dabei kann verschiedenstes Packgut verarbeitet werden, nämlich sowohl grob- als auch feinkörniges Schüttgut, dünne und zähflüssige Flüssigkeiten usw.

Weitere Merkmale, Einzelheiten und Vorteile der Erfindung ergeben sich aus dem Wortlaut der Ansprüche sowie aus der folgenden Beschreibung von Ausführungsbeispielen anhand der Zeichnung. Darin zeigen:

Fig. 1a ein Zeitdiagramm zur Erläuterung des erfindungsgemäßen Verfahrens,

Fig. 1b ein Zeitdiagramm zum Vergleich mit einer Vorgehensweise nach dem Stand der Technik,

Fig. 1c ein Zeitdiagramm zum Vergleich mit einem weiteren herkömmlichen Verfahren,

Fig. 2 eine Schnittansicht einer Vorrichtung nach der Erfindung, wobei die Schnittebene der Linie II-II in Fig. 4 entspricht,

Fig. 3 eine Schnittansicht der Vorrichtung entsprechend der Schnittebene III-III in Fig. 4,

Fig. 4 eine Vorderansicht der Vorrichtung von Fig. 2 und 3,

Fig. 5 eine Draufsicht auf die Vorrichtung von Fig.4 und

Fig. 6 eine Vorderansicht ähnlich Fig. 4, jedoch von einer abgewandelten Vorrichtungs-Ausführungsform.

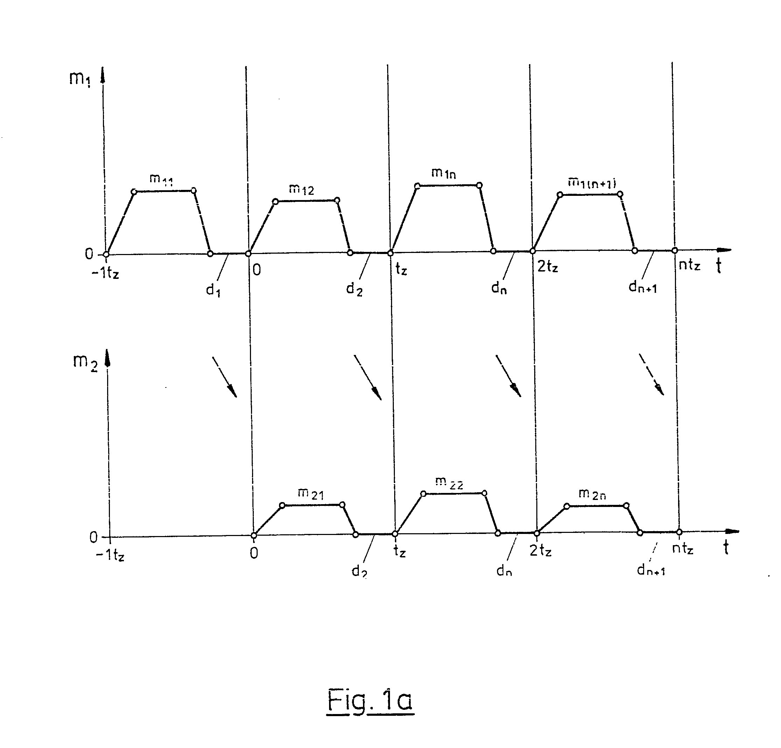

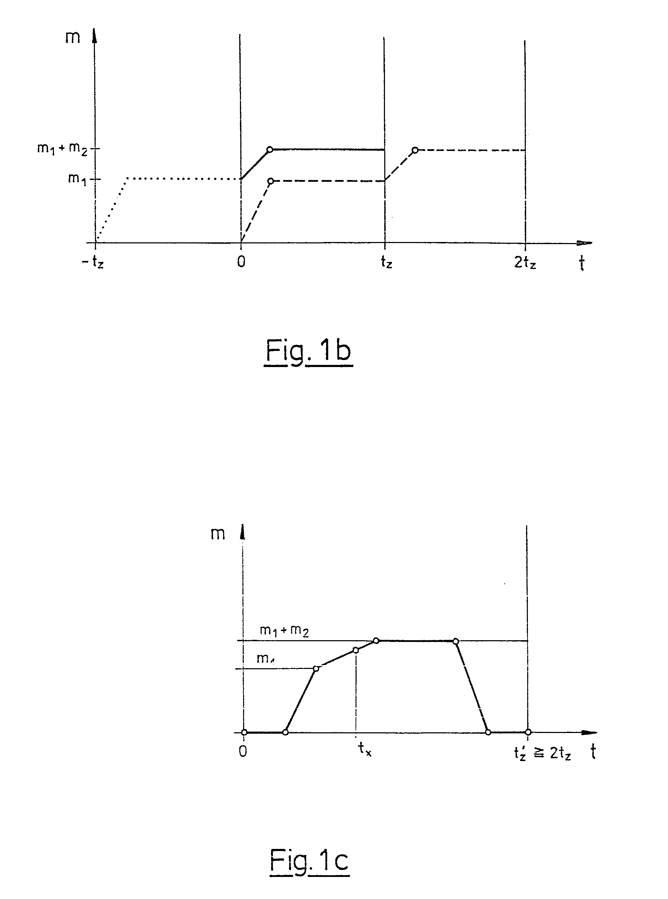

Das Schema der Fig. 1a läßt im oberen Teil den zeitlichen Ablauf einer Grobdosierung erkennen. Eine allgemein vorgegebene Menge $m_1$ wird während des ansteigenden Kurventeils unter Wägekontrolle in einen Zwischenspeicher oder Wägebehälter abgefüllt. Dabei ist eine gewisse Mengentoleranz zulässig, so daß etwa bei einem Wert von $m_1 = 170$ g die Istmengen

$$m_{11} = 180,5 \text{ g}$$
$$m_{12} = 164,1 \text{ g}$$
$$m_{1n} = 190,7 \text{ g}$$
$$m_{1(n+1)} = 177,9 \text{ g}$$

betragen mögen. Das erfindungsgemäße Wägesystem wird auf den Arbeitszyklus $t_z$ abgestimmt, dessen Dauer beispielsweise 1 s beträgt. Die Zuführeinrichtung der Grobdosierung wird so eingestellt, daß der ungefähre Wert $m_1$ innerhalb des Arbeitszyklus $t_z$ erreichbar ist.

Sobald die Menge $m_{11}$ in dieser Weise abgefüllt wurde, was in Fig. 1b mit dem gepunkteten Verlauf angedeutet ist, kann das serienmäßige Abpacken zum Zeitpunkt 0 beginnen. Dabei liefert die Feindosierung jeweils die Ergänzungsmengen $m_2$, so daß die Sollmenge jeder Charge (nämlich $m_1 + m_2$) abgefüllt werden kann. Im ersten Arbeitszyklus $t_z$ wird durch die Feindosierung die Ergänzungsmenge $m_{21}$ auf die schon bereitstehende Hauptmenge $m_{11}$ aufgefüllt. Gleichzeitig erfolgt die Grobdosierung der Hauptmenge $m_{12}$. Durch phasenverschobene Dosierung erreicht man, daß auf diese Weise in jedem einzelnen Arbeitszyklus $t_z$ die gesamte Sollmenge $m_1 + m_2$ einer Charge abgefüllt wird, wie das in Fig. 1b durch den ausgezogenen Kurvenverlauf gezeigt ist. Mit gestrichelten Linien ist dort eine Vorgehensweise des Standes der Technik veranschaulicht: Man benötigte hierbei einen Arbeitszyklus für die Grobdosierung und einen weiteren für die anschließende Feindosierung. Diese Dosierungs- bzw. Wägungsform wird hauptsächlich benutzt, wenn Güter unterschiedlicher Eigenschaften in ein Behältnis einzubringen sind oder wenn für eine Zwischenwägung genügend Zeit vorhanden sein muß.

Gemäß einer anderen, weit verbreiteten Vorgehensweise (Fig. 1c) schließt sich an die Grobdosierung sofort die Feindosierung an. Diese wird zwar zum Zeitpunkt $t_x$ zufuhrseitig beendet, doch befinden sich noch Füllgut-Teilchen im freien Fall auf einer meist größer bemessenen Fallstrecke. Die üblichen Fallhöhen bewirken daher Verlustzeiten am Anfang und besonders bei der Feindosierung, was der verzögerte Anstiegsverlauf in Fig. 1c deutlich erkennen läßt.

Der Kurvenverlauf in den Fig. 1a bis 1c ist nur schematisch dargestellt. Der Anstieg während der Dosierzeiten kann erfindungsgemäß mit unterschiedlichen Geschwindigkeiten und anders geformten Flanken vor sich gehen; die anschließenden Beruhigungszeiten (waagerechter Verlauf) werden bei der Wägung ausgenutzt. Die abfallende Kurventeile zeigen die Entleerungszeiten des Behälters, an die sich Puffer-Zeiträume $d_i$ anschließen.

Diese dienen dem sicheren Übergang von einem Zyklus zum nächsten, der elektronischen Rückstellung und dem FreigabeSignal für den nächsten Wägevorgang.

Aus Fig. 1a ist ferner ersichtlich, daß sich die dosierten Mengen $m_1 + m_2$ jeweils komplementär verhalten. Je größer $m_1$ ist, desto kleiner ist $m_2$; und umgekehrt. Je nach dem, in welchem Ausmaß die vorgegebene Hauptmenge $m_1$ über- oder unterschritten wird, sind entsprechende Ergänzungsmengen $m_2$ erforderlich. Im obigen Zahlenbeispiel ergeben sich hierfür folgende Werte:

$m_2 = 30$ g
$m_{21} = 20{,}1$ g
$m_{22} = 36{,}0$ g
$m_{2n} = 9{,}6$ g
$m_{2(n+1)} = 22{,}2$ g.

Wird die Abfüllung zum Zeitpunkt $n.t_z$ abgebrochen, so bleibt die Hauptmenge $m_{1(n+1)}$ für den nächsten Einschaltzyklus zur Verfügung.

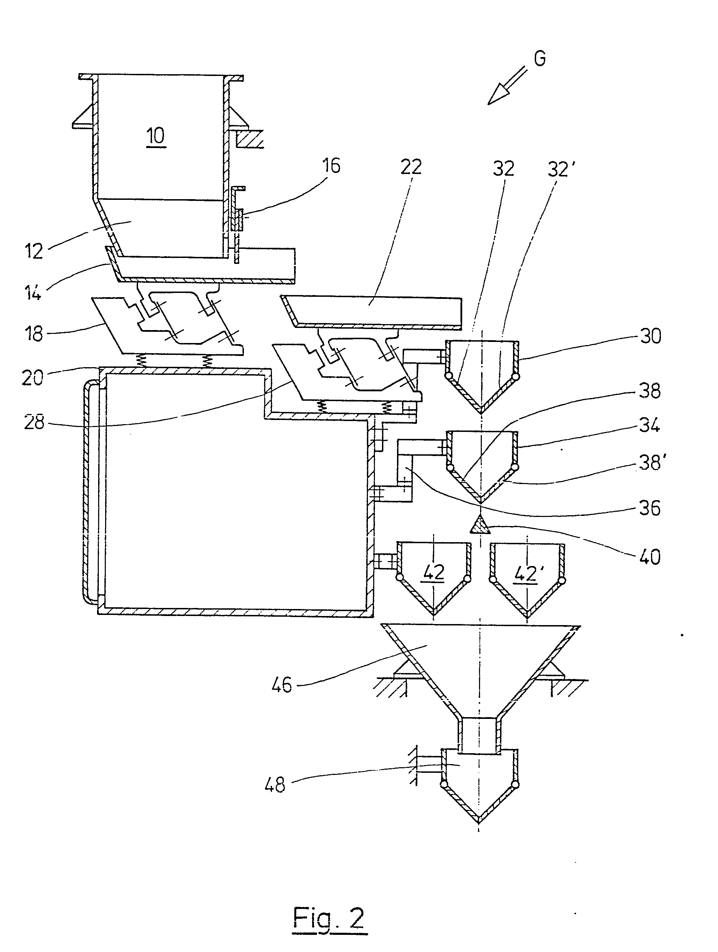

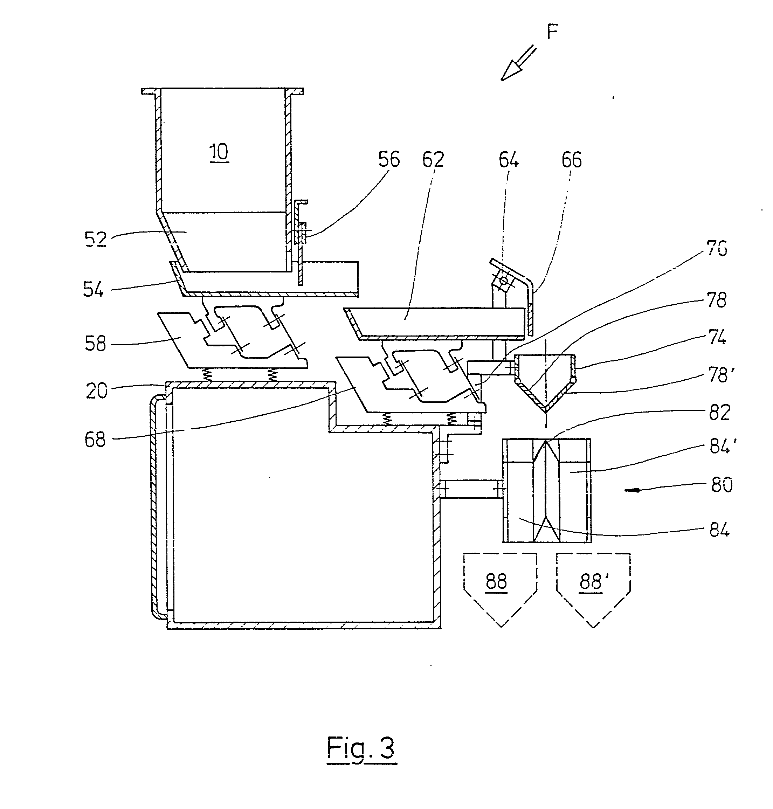

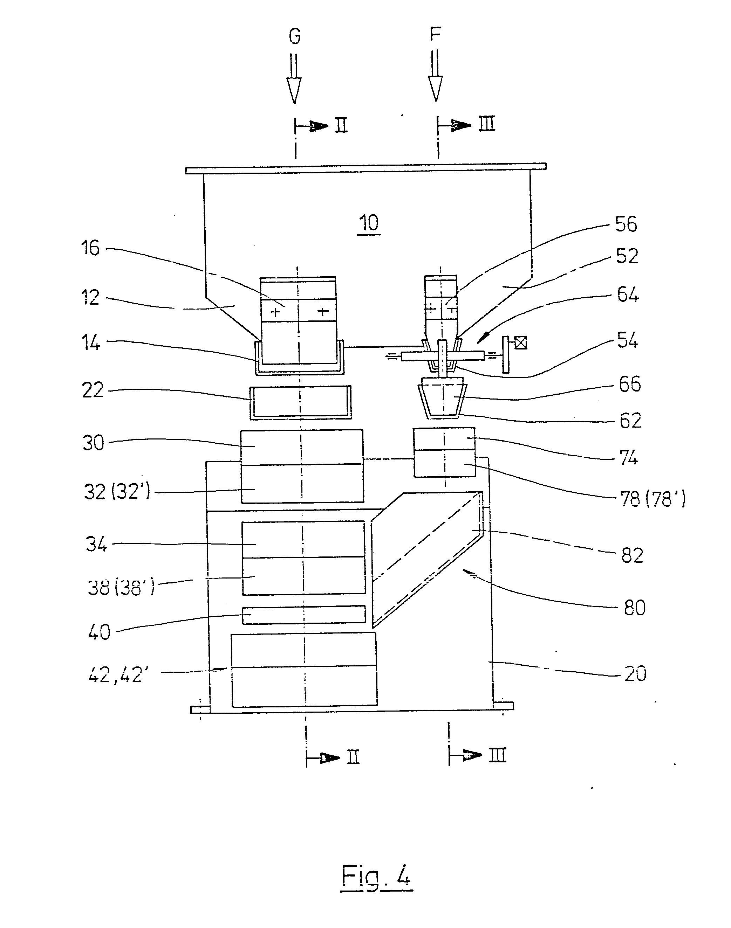

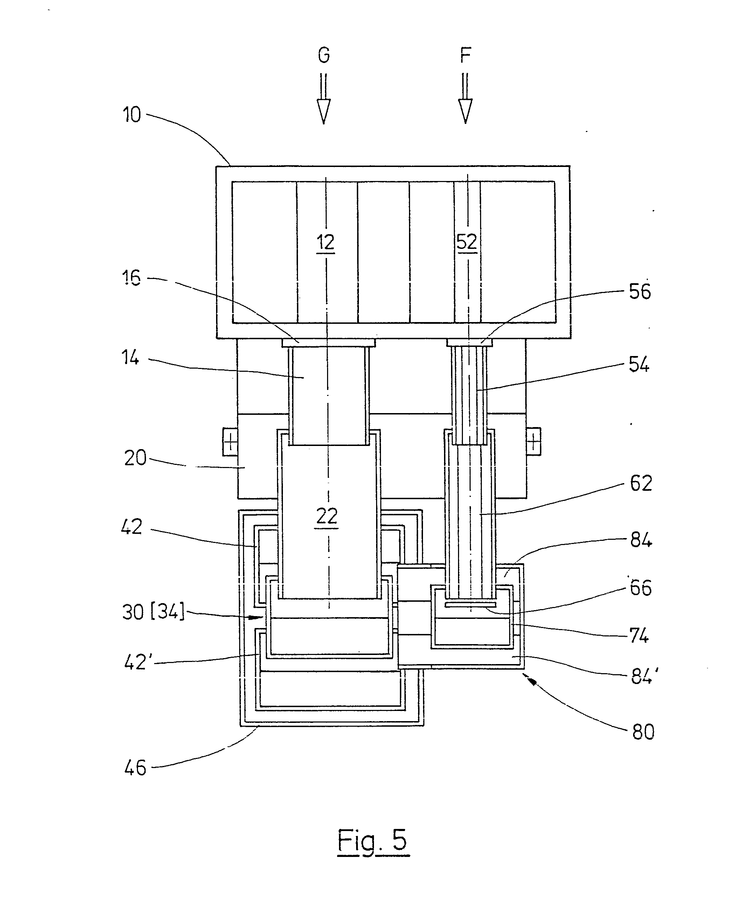

Eine erfindungsgemäße Vorrichtung ist in den Fig. 2 bis 5 veranschaulicht. Wie insbesondere aus Fig. 4 und 5 erkennbar ist, setzt sich die Vorrichtung aus einem Grobdosiersystem G und einem Feindosiersystem F zusammen. Aus einem gemeinsamen Vorratsbehälter 10 werden die beiden Systeme G, F gleichzeitig gespeist.

Das Grobdosiersystem G wird von dem Auslauf 12 des Vorratsbehälters 10 aus beschickt. Es hat eine obere Zuführrinne 14 mit einem produktabhängig fest eingestellten Niveauregler 16. Ein Vibrator 18 für die obere Zuführrinne 14 ist an einem Rahmen oder Gestell 20 angebracht.

Unterhalb der oberen Zuführrinne 14 befindet sich eine weitere Zuführrinne 22, die von einem Vibrator 28 bewegbar ist. Beide Zuführrinnen 14, 22 sind im wesentlichen horizontal oder leicht geneigt angeordnet.

Am freien Ende der unteren Zuführrinne 22 befindet sich ein etwas tiefer liegender Vorschaltspeicher 30, der zwei gleichzeitig betätigbare Bodenklappen 32, 32' hat und ebenfalls am Maschinengestell 20 befestigt ist. Unterhalb des Speichers 30 schließt sich eine Wägebehälter 34 an, der an einer Wägezelle 36 befestigt ist. Entleerklappen 38, 38' des Wägebehälters 34 sind einzeln betätigbar, bevorzugt wechselweise. Dadurch ist es möglich, über eine mittig unter dem Wägebehälter 34 angeordnete Weiche 40 abwechselnd einen von zwei Nachbehältern 42, 42' zu füllen. Von dort gelangt das Schüttgut über einen Sammeltrichter 46 in einen Zwischenspeicher 48 bzw. in die jeweilige (nicht dargestellte) Packung.

Das Feindosiersystem F ist analog aufgebaut. Es wird von einem Auslauf 52 des Vorratsbehälters 10 gespeist, wobei eine obere Zuführrinne 54 mit produktspezifisch eingestelltem Nieveauregler 56 eine untere Zuführrinne 62 beaufschlagt. Beide Rinnen 54, 62 sind jeweils mittels eines Vibrators 58 bzw. 68 bewegbar.

An einer Halterung 64 ist eine Stauklappe 66 gelagert, mit welcher die untere Zuführrinne 62 gemäß einer (nicht gezeichneten) Steuerung plötzlich und vollständig verschlossen werden kann. An einer Wägezelle 76 befindet sich ein Wägebehälter 74, der einzeln betätigbare Entleerklappen 78, 78' aufweist. Mittig darunter ist eine Rutsche 80 angeordnet, die einen Keil 82 hat, welcher zwei Bahnen 84, 84' trennt. Darunter befindet sich je ein Nachbehälter 88, 88'.

Aus der dargestellten Anordnung ist die Funktionsweise verständlich. Das Schüttgut gelangt aus dem Vorratsbehälter 10 über die Zuführrinnen 14, 22 bzw. 54, 62 entweder in einen Zwischenbehälter, nämlich den Vorschaltspeicher 30 des Grobdosiersystems G, oder direkt in den nachgeordneten Wägebehälter 34 bzw. 74. Am Vorschaltspeicher 30 sind die Bodenklappen 32, 32' vorzugsweise synchron betätigbar, damit die grobdosierte Hauptmenge sehr rasch in den Wägebehälter 34 übergeben werden kann. Während diese Hauptmenge im Wägebehälter 34 des Grobdosiersystems G gewogen wird, erfolgt im gleichen Arbeitszyklus $t_z$ die Wägung der Ergänzungsmenge für die unmittelbar zuvor abgefüllte, beruhigt bereitstehende vorherige Hauptmenge. Durch wechselweise Steuerung der Entleerklappen 38, 38' und 78, 78' werden die

Teilmengen so zusammengeführt, daß in jedem Arbeitszyklus eine volle Charge abpackbar ist. Wesentlich hierfür sind die Weiche 40 sowie die Rutsche 80 bzw. deren Trennkeil 82. Eine geeignete geometrische Anordnung veranschaulicht Fig. 5, wobei das Grobdosiersystem G parallel zu dem Feindosiersystem F verläuft, dessen Rutsche 80 eine Umleitung des Feinstroms zu den Nachbehältern 42, 42' hin bewirkt. Es ist anzumerken, daß je nach den räumlichen Gegebenheiten auch andere Winkelanordnungen möglich sind, beispielsweise spitz- und stumpfwinkelig. Die Öffnung der Zwischenspeicher erfolgt bevorzugt auf wahlweisen Abruf, je nach einer elektronisch vorwählbaren Kombination der zu vereinigenden Produktmengen.

Man sieht, daß die erfindungsgemäße Vorrichtung eine Additionswaage bildet, die ein Grobdosiersystem G und ein Feindosiersystem F miteinander kombiniert. Dies kann jeweils in einer Baueinheit geschehen. Zwei oder mehr solcher Einheiten vervielfachen die Anzahl der möglichen Kombinationen, so daß sich Totzeiten völlig ausschalten lassen.

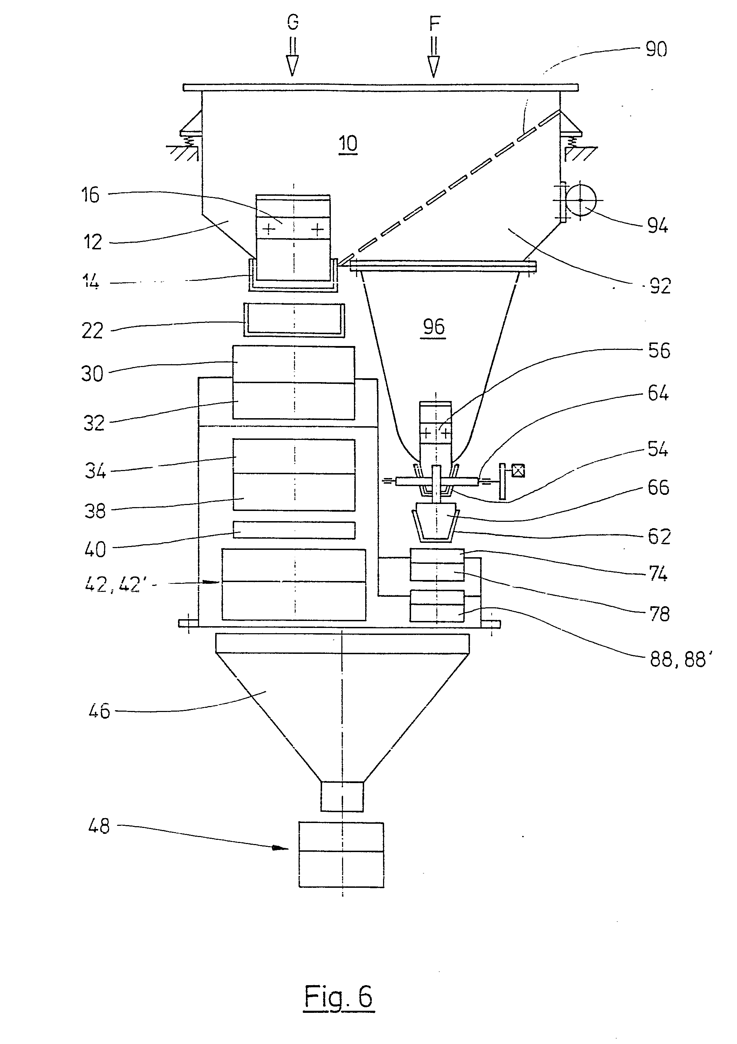

In Fig. 6 ist eine abgewandelte Ausführungsform gezeigt, die bei ähnlichem Grundaufbau eine vereinfachte Konstruktion insbesondere des Feindosiersystems F enthält. Im Vorratsbehälter 10 ist hierbei ein Sieb 90 schräg zur Mitte abfallend angeordnet. Sein Auslauf 92 beaufschlagt unmittelbar das Feindosiersystem F, während der Auslauf 12 ein Grobdosiersystem G beschickt, das dem vorbeschriebenen ganz oder großenteils entspricht. Der Vorratsbehälter 10 kann federnd gelagert und von einem (nicht dargestellten) Vibrator in Schwingungen versetzbar sein. Desgleichen ist das Sieb 90 federnd gelagert; ein Vibrator 94 bewirkt eine Rüttelsiebung, so daß feines Schüttgut über den Auslauf 92 in den darunter befindlichen Trichter 96 gelangt. Die weiteren Elemente des Feindosiersystems F entsprechen den oben erwähnten Vorrichtungsteilen. Allerdings kann statt einer Rutsche ein Paar von Zwischenspeichern oder Nachbehältern 88, 88' vorgesehen sein, so daß die Entleerung direkt in den Sammeltrichter 46 hinein erfolgt. Auch Baueinheiten des in Fig. 6 dargestellten Typs lassen sich mit Vorteil gruppenweise verwenden.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

## Patentansprüche

1. Verfahren zum selbsttätigen gravimetrischen Abfüllen von Schüttgut und/oder Flüssigkeiten, das mit vorgegebenem Sollgewicht jeweils durch Grobdosierung einer Hauptmenge und durch Feindosierung einer Ergänzungsmenge unter Wägekontrolle chargenweise abgepackt wird, dadurch gekennzeichnet, daß nach einmaliger Grob-Vordosierung ($m_{11}$) alle weiteren Grob- und Feindosierungen ($m_{12}$ .. $m_{1(n+1)}$; $m_{21}$ ... $m_{2n}$) auf getrennten Dosier- und Wägestrecken derart zusammen vor sich gehen, daß in jedem Arbeitszyklus ($t_z$) eine Sollmenge (z. B. $m_{11} + m_{21}$) abgefüllt wird.

2. Verfahren nach Anspruch 1, dadurch gekennzeichnet, daß wenigstens zwei Dosier- und Wägevorgänge im Parallelbetrieb jeweils im wesentlichen gleichzeitig, jedoch phasenverschoben stattfinden.

3. Verfahren nach Anspruch 1 oder 2, dadurch gekennzeichnet, daß die Grobdosierung ($m_{11}$...$m_{1(n+1)}$) nur auf der einen Dosier- und Wägestrecke, die Feindosierung ($m_{21}$...$m_{2n}$) nur auf der anderen Dosier- und Wägestrecke erfolgt.

4. Verfahren nach einem der Ansprüche 1 bis 3, dadurch gekennzeichnet, daß die Grobdosierung ($m_{11}$...$m_{1(n+1)}$) wahlweise gewichts- oder zeitgesteuert stattfindet, während die Feindosierung ($m_{21}$ .. $m_{2n}$) nur gewichtsabhängig gesteuert wird.

5. Verfahren nach Anspruch 4, dadurch gekennzeichnet, daß bei de Grobdosierung das Schüttgut in der einen Dosierstrecke zeitgesteuert angesammelt und dann plötzlich zur Wägung freigegeben wird, worauf von der anderen Dosier-und Wägestrecke her die Feindosierung erfolgt.

6. Verfahren nach Anspruch 4 oder 5, gekennzeichnet durch solche Einstellung des Arbeitszyklus ($t_z$), daß die Vorgänge der Grob- und Feindosierung jeweils etwa gleichlang dauern.

7. Verfahren nach wenigstens einem der Ansprüche 1 bis 6, dadurch gekennzeichnet, daß die aneinander anschließenden Arbeitszyklen ($t_z$) jeweils mit einem Puffer-Zeitraum ($d_i$) enden.

8. Vorrichtung zum selbsttätigen gravimetrischen Abfüllen von Schüttgutchargen aus einem Vorratsbehälter, insbesondere zur Durchführung des Verfahrens nach wenigstens einem der Ansprüche 1 bis 7, mit Vibratoren für Zuführrinnen sowie mit Absperrorganen zum Grobdosieren einer Hauptmenge und zum Feindosieren einer Ergänzungsmenge, die zusammen jeweils die Chargen-Sollmenge ergeben, ferner mit wenigstens einer Wägezelle, mit Übergabe-, Aufnahme- und Wägebehältnissen für das Schüttgut sowie mit Steuereinrichtung zum taktweisen Zusammenführen und Abpacken jeder Charge, gekennzeichnet durch wenigstens zwei parallel arbeitende Dosier- und Wägesysteme (G, F) mit Füllstrom-Zwischenspeichern (30, 42) und -Weichen (40, 82) in solcher Anordnung, daß durch gleichzeitig, jedoch phasenverschoben stattfindende Grob- und Feindosierung in jedem Arbeitstakt ($t_z$) eine Sollmengen-Charge (z. B. $m_{11} + m_{21}$) abfüllbar ist.

9. Vorrichtung nach Anspruch 8, dadurch gekennzeichnet, daß zumindest ein Dosier- und Wägesystem (G) ausschließlich zur Grobdosierung sowie zumindest ein Dosier- und Wägesystem (F) ausschließlich zur Feindosierung vorgesehen ist.

10. Vorrichtung nach Anspruch 8 oder 9, dadurch gekennzeichnet, daß das bzw. jedes Grobdosiersystem (G) wenigstens zwei Zwischenspeicher (30, 48) aufweist.

11. Vorrichtung nach Anspruch 10, dadurch gekennzeichnet, daß die Zwischenspeicher (30, 48) mit Paaren von gleichzeitig betätigbaren Bodenklappen (32, 32') versehen sind.

12. Vorrichtung nach einem der Ansprüche 8 bis 11, dadurch gekennzeichnet, daß das bzw. jedes Grobdosiersystem (G) wahlweise zeit- oder gewichtsabhängig steuerbar ist und daß seinem Wägebehälter (34) wenigstens zwei Nachbehälter (42, 42') zugeordnet sind, von denen im Betrieb jeweils einer mit Schüttgut beschickt ist.

13. Vorrichtung nach wenigstens einem der Ansprüche 8 bis 12, dadurch gekennzeichnet, daß das bzw. jedes Feindosiersystem (F) gewichtsabhängig steuerbar ist und daß seinem Wägebehälter (74) zumindest ein Nachbehälter (88, 88') oder zumindest eine Rutsche (80) zugeordnet ist.

14. Vorrichtung nach Anspruch 13, dadurch gekennzeichnet, daß die Rutsche (80) wenigstens zwei Bahnen (84, 84') aufweist, vorzugsweise mit einem Trennkeil (82).

15. Vorrichtung nach wenigstens einem der Ansprüche 8 bis 14, dadurch gekennzeichnet, daß jeweils wenigstens zwei Zuführrinnen (14, 22; 54, 62) einander terrassen- oder etagenförmig zugeordnet sind, wobei die obere Rinne (14; 54) mit einem Niveauregler (16; 56) versehen ist und die untere Rinne (22; 62) zumindest des bzw. jedes Feindosiersystems (F) einen Schnellverschluß aufweist, bevorzugt eine elektronisch gesteuerte Stauklappe (66).

16. Vorrichtung nach Anspruch 15, dadurch gekennzeichnet, daß die Zuführrinnen (14, 22; 54, 62) zueinander in vorgegebenem Winkel angeordnet sind.

17. Vorrichtung nach wenigstens einem der Ansprüche 8 bis 16, dadurch gekennzeichnet, daß jeder Wägebehälter (34, 74) zwei symmetrisch oberhalb einer Weiche (40) oder einer Rutsche (80) angeordnete Entleerklappen (38, 38'; 78, 78') aufweist.

18. Vorrichtung nach Anspruch 17, dadurch gekennzeichnet, daß die Entleerklappen (38, 38'; 78, 78') einzeln, insbesondere abwechselnd betätigbar sind.

19. Vorrichtung nach wenigstens einem der Ansprüche 8 bis 18, dadurch gekennzeichnet, daß der Vorratsbehälter (10) eine Klassiereinrichtung aufweist, namentlich ein schräg zur Mitte abfallendes Sieb (90), unter dem sich ein Feingut-Auslauf (92) befindet.

20. Vorrichtung nach Anspruch 19, dadurch gekennzeichnet, daß der Vorratsbehälter (10) und/oder das Sieb (90) federnd gelagert und mit einem Vibrator (z. B. 94) versehen bzw. verbunden ist.

21. Vorrichtung nach wenigstens einem der Ansprüche 8 bis 20, dadurch gekennzeichnet, daß zwei oder mehr Dosier- und Wägesysteme (G, F) zu einer Baueinheit verbunden oder verbindbar sind.

22. Vorrichtung nach Anspruch 9 und 21, dadurch gekennzeichnet, daß wenigstens ein Grobdosiersystem (G) mit wenigstens einem Feindosiersystem (F) in einer Baueinheit zusammengefaßt ist.

Fig. 1a

Fig. 1b

Fig. 1c

Fig. 2

Fig. 3

Fig. 4

Fig. 5

Fig. 6